# EUROPEAN PATENT APPLICATION

(11) **EP 1 818 855 A2**
(43) Date of publication of application: **15.08.2007**
(21) Application number: 07003025.9
(22) Date of filing: 13.02.2007
(51) Int. Cl.: G06K 9/00, G06K 9/20

(54) **Infrared face authenticating apparatus, and portable terminal and security apparatus including the same**

(30) Priority: 13.02.2006 JP 2006035530; 28.12.2006 JP 2006354744; 01.02.2007 JP 2007022526
(71) Applicant: Smart Wireless Corporation, Tokyo 101-0051 (JP)
(72) Inventor: Shimada, Hiroyuki c/o Smart Wireless Corporation, Chiyoda-ku, Tokyo 101-0051 (JP); Nakamura, Yasuyuki c/o Smart Wireless Corporation, Chiyoda-ku, Tokyo 101-0051 (JP); Kageyama, Yuichi c/o Smart Wireless Corporation, Chiyoda-ku, Tokyo 101-0051 (JP)
(74) Representative: Zimmermann, Gerd Heinrich

(57) **Abstract**

Provided are an infrared (Ir) face authentication apparatus, a portable terminal and a security apparatus including the Ir face authentication apparatus as well as an authentification method. The Ir face authentication apparatus includes a light source irradiating Ir light having a wavelength of 760nm or higher onto a face, an imaging unit detecting reflected light of the Ir light to output an Ir image, and an authenticator performing authentication of the face using the Ir image. The Ir face authentication apparatus further includes a display displaying the Ir image output from the imaging unit, and the image unit and the display are installed on the same surface.

## Description

### BACKGROUND OF THE INVENTION

### 1. Field of the Invention

The present invention relates to face authenticating technology using an infrared (Ir) image obtained from reflected light of Ir light irradiated onto a face.

### 2. Description of the Related Art

Methods of authenticating a person are largely classified into three categories. In a first authentication method, belongings such as a key or an identification (ID) card are used. However, security is threatened due to a loss or robbery of the belongings in the first authentication method. In a second authentication method, authentication is performed using knowledge such as a password or the like. However, a security problem occurs due to forgetfulness of a user or a third party unlawfully acquiring the knowledge.

In a third authentication method, which has recently attracted attentions, biometric authentication is performed using biometric information such as a fingerprint, a palm, an iris, a vein, a voice, a face, or the like. A security problem caused by loss as described in the first or second authentication method is considerably inhibited in the biometric authentication. Also, another person cannot be authenticated. Thus, security can be improved, and an authentication system using biometrics is expected to become more widespread.

Biometric authentication using fingerprints or a palm mainly uses a tip of a finger or a hand, and thus skin surface may be thinner than normal. Here, a recognition rate is frequently remarkably lowered. A recognition rate of biometric authentication using voice recognition is also lower at present. Biometric authentication using an iris or a vein has a higher recognition rate than biometric authentication using the fingerprints or the palm but requires an eye or hand of a person to access an authentication apparatus. Also, since a biometric authentication apparatus using an iris or a vein has a large size, the biometric authentication apparatus is installed in a large-sized fixed apparatus such as an automated teller machine (ATM) in a bank but cannot be mounted in a portable device. In biometric authentication using face recognition, an authentication threshold value is increased in order to lower an allowance rate of another person so as to improve precision. Thus, a denial rate of a person is heightened. Also, a face authentication apparatus using visible light cannot distinguish a face photograph from an actual human face. Thus, Japanese Patent Laid-open Publication No. 2005-242677 discloses authentication in which biometric authentication using face recognition is combined with biometric authentication using an iris to improve authentication precision.

When biometric authentication using face recognition is combined with biometric authentication using an iris, a size of a biometric authentication apparatus is increased. Thus, when such a biometric authentication apparatus is mounted in a portable terminal such as a portable phone or a personal digital assistant (PDA), limited space becomes a problem. Also, biometric authentication using face recognition is performed using a visible light image, and thus authentication precision is lower.

In addition, when face authentication is performed using a visible light image to allow a person entrance into a building, the difference between illuminations in daytime and nighttime is great. Thus, although an incandescent lamp is irradiated onto a face at nighttime to perform face authentication, authentication precision is lower. Moreover, if the face authentication apparatus is installed in an automobile to prevent a robbery of the automobile, the difference between illuminations in daytime and nighttime is great. Thus, authentication precision is lower.

### SUMMARY OF THE INVENTION

The aforementioned problems are at least partly solved by an Ir (infrared) face authentification apparatus as laid out in claim 1, a portable terminal as laid out in claim 12, a security apparatus as laid out in claim 13, and a method as laid out in claim 14. Further aspects, details, features and embodiments are evident from the dependent claims, the description and the accompanying drawings.

The present invention provides an infrared face authentication apparatus using an infrared image to improve a face authentication rate.

The present invention also provides a portable terminal or a security apparatus including the infrared face authentication apparatus.

An infrared (Ir) face authentication apparatus according to a first aspect of the present invention includes a light source irradiating Ir light having a wavelength of 760nm or more onto a face, an imaging unit detecting reflected light of the Ir light to output an Ir image, and an authenticator performing authentication of the face using the Ir image.

According to this configuration, face authentication can be performed under various conditions such as an illumination such as a fluorescent lamp, the sunlight, or the thick darkness. Biometric authentication using an iris does not need to be combined with biometric authentication using face recognition, and face authentication can be realized using a highly precise, small apparatus.

In the infrared (Ir) face authentication apparatus according to a second aspect of the present invention, the authenticator may specify a contour of the entire face and positions of eyes from the Ir image to perform authentication of the face.

Through this configuration, since the Ir face authentication apparatus permeates into the eyes using Ir light to specify the positions of the eyes, a probability of recognizing a face wrong is lower. Even if a face of a person wearing glasses is authenticated using an Ir image, authentication is hardly affected by lenses of the glasses.

In the infrared (Ir) face authentication apparatus according to a third aspect of the present invention, the authenticator may specify a contour of the entire face, positions of eyes, positions of nostrils, and a position of a mouth from the Ir image to perform authentication of the face.

Through this configuration, Ir light may permeate into a skin to obtain an image, and positions of eyes, positions of nostrils, a position of a mouth may be specified on the image. If a person put on a makeup to disguise like an original person, a probability of recognizing the person as the original person is low because the image is obtained using the Ir light permeating into a skin.

In the infrared (Ir) face authentication apparatus according to a fourth aspect of the present invention, the light source may be one diode or a plurality of diodes, and a radiation intensity of the diode or a sum of radiation intensities of the plurality of diodes may be 0.3mW/sr or higher.

Ir light must be irradiated onto a face using a limited amount of power. Face recognition is lowered when too weak Ir light is irradiated onto the face. Also, if the face is at a predetermined distance, face recognition is lowered. For example, if an Ir face authentication apparatus is installed in a mobile phone, a user may hold the mobile phone to adjust a distance between the face and the light source or the image unit. Also, if a highly sensitive light receiving element is used, face authentication can be performed using a diode emitting light having a radiation intensity of about 0.3mW/sr.

In the infrared (Ir) face authentication apparatus according to a fifth aspect of the present invention, the light source may be a plurality of diodes, wherein lr light irradiated from one diode of the plurality of diodes has a different wavelength from Ir light irradiated from another diode of the plurality of diodes.

A wavelength of Ir light appropriate for Ir face authentication is basically 760nm. However, a wavelength range which does not interfere with Ir of the sunlight may be preferable for Ir face authentication. Such wavelength range may be a plurality of wavelength ranges. Thus, a plurality of diodes irradiating light with different wavelengths onto a face may be installed.

In the infrared (Ir) face authentication apparatus according to a sixth aspect of the present invention, the imaging unit may be a photoelectric transformation element which includes a visible light receiving element including a visible light filter receiving visible light, an Ir light receiving element including an Ir light filter receiving Ir light having a wavelength of 760nm or higher, and a switching unit electrically switching the visible light receiving element and the Ir light receiving element.

According to this configuration, visible and Ir light cameras do not need to be separately installed, and a small apparatus such as a mobile phone can be effectively used. Also, since the visible and Ir light receiving elements are electrically switched, the Ir face authentication apparatus has a fast response time and is less broken down.

In the infrared (Ir) face authentication apparatus according to a seventh aspect of the present invention, the imaging unit may be a photoelectric transformation element which comprises a switching unit mechanically switching a visible light filter and an Ir light filter, the visible light filter covering the entire surface of the photoelectrical transformation element to transmit light having a visible light wavelength, the Ir light filter covering the entire surface of the photoelectrical transformation element to transmit Ir light having a wavelength higher than 760nm.

According to this configuration, visible and Ir light cameras do not need to be separately installed, and a limited space of a mobile phone can be effectively used. Also, since the visible and Ir light receiving elements are mechanically switched, sizes of the visible and Ir light receiving elements can be increased.

In the infrared (Ir) face authentication apparatus according to an eighth aspect of the present invention, the lr face authentication apparatus may further include a display displaying the lr image output from the imaging unit, wherein the image unit and the display are installed on the same surface.

A user may check the size and position of the user's face displayed on a display to recognize the user's face. Thus, if the Ir face authentication apparatus is installed in a small apparatus such as a mobile phone, the user can move an arm upward, downward, or the left and/or right or extends or bends the arm to improve a recognition rate. Also, if the Ir face authentication apparatus is installed in a fixed security apparatus, the user may check the size and position of the user's face displayed on the display to adjust a sitting or standing position so as to improve a recognition rate.

In the infrared (Ir) face authentication apparatus according to a ninth aspect of the present invention, the Ir light filter may be an Ir light filter transmitting light with a wavelength of 760nm or higher.

Thus, when an Ir image is photographed, visible light may be intercepted. Thus, the image unit may output a clear Ir image without being affected by the visible light.

In the infrared (Ir) face authentication apparatus according to a tenth aspect of the present invention, according to the ninth aspect of the present invention, the Ir light filter may be an Ir light filter transmitting light with a wavelength in a range in which Ir radiation of the sunlight is suddenly decreased on the earth's surface.

If the Ir filter transmits Ir light having a wavelength of 760nm or higher, particularly, a wavelength range in which an Ir light radiation amount of the sunlight is suddenly decreased on the earth's surface, interference with the Ir light of the sunlight is reduced. In particular, since the Ir light is also strong when the sunlight in the middle of summer is strong, a face recognition authentication rate using the lr light is lowered. In the case of the wavelength range in which the Ir light radiation amount of the sunlight is suddenly decreased, a high authentication rate can be maintained.

In the infrared (Ir) face authentication apparatus according to an eleventh aspect of the present invention, the light source may include a wavelength in a range in which Ir radiation of the sunlight is suddenly decreased on the earth's surface.

If the Ir filter transmits Ir light having a wavelength of 760nm or higher, particularly, a wavelength area in which an Ir light radiation amount of the sunlight is suddenly decreased on the earth's surface, interference with the Ir light of the sunlight is reduced. If the wavelength of the area is irradiated from the light source, interference with the Ir light of the sunlight is reduced.

A portable terminal according to a twelfth aspect of the present invention includes the Ir face authentication apparatus, wherein the authenticator operates when the portable terminal starts to be used or a money operation starts.

Since the portable terminal includes important information such as personal information or has a function of a money operation, a user can pass face authentication and then access the portable terminal. Thus, the important information may flow out or unauthorized withdrawal of money may occur.

A security apparatus installed in a movable or fixed terminal according to a thirteenth aspect of the present invention includes the Ir face authentication apparatus according to one of the first through eleventh aspects of the present invention, wherein the authenticator performs face authentication of a person accessing the movable or fixed terminal.

The security apparatus may authenticate a face of a person using Ir light and thus guarantee security.

### BRIEF DESCRIPTION OF THE DRAWINGS

The accompanying drawings relate to embodiments of the invention and are described in the following:
FIG. 1A is a perspective view of a folder type mobile phone 10 including an infrared (Ir) light emitting diode (LED) 60;
FIG. 1 B is a rear view of a rotary type mobile phone 20 including an Ir LED 60;
FIG. 2 is a block diagram of an Ir face authentication apparatus 100;
FIG. 3A is a view illustrating a camera 110-A including a visible camera light receiving unit 120 and an Ir camera light receiving unit 122;
FIG. 3B is a view illustrating a camera 110-B including a filter switching camera light receiving unit 123;
FIG. 4A is a view illustrating a camera 110-C including a camera light receiving unit 124 having a filter installed in a light receiving element;
FIG. 4B is an enlarged view of a light receiving element of a charge-coupled device 117 of the camera light receiving unit 124;
FIG. 5 is a graph illustrating a relationship between a wavelength and a spectral response in an inter-transfer (IT) CCD and a frame transfer (FT) CCD;
FIG. 6 is an image view illustrating a process of irradiating Ir light onto a face using a mobile phone;
FIG. 7 is a table illustrating data obtained through experiments performed on how many Ir LED 60s are arranged in the IT CCD;
FIG. 8 is a table illustrating data obtained through experiments performed on how many Ir LEDs 60 are arranged in the FT CCD;
FIG. 9 is a graph illustrating a radiation OE outside the atmosphere and a radiation EE on the earth's surface with a spectrum of sunlight;
FIG. 10 is a graph illustrating a relationship between a wavelength of an Ir IED 60 and a first example of a wavelength cut of an Ir filter 127;
FIG. 11A is a graph illustrating a second example of a wavelength cut of the Ir filter 127;
FIG. 11 B is a graph illustrating a third example of a wavelength cut of the Ir filter 127;
FIG. 12 is a flowchart of a process of performing face authentication when a mobile phone starts to be used; and
FIG. 13 is a flowchart of a process of performing face authentication when money is settled.

### DETAILED DESCRIPTION OF THE INVENTION

A preferred embodiment of an infrared (Ir) authentication apparatus for irradiating Ir light and imaging an Ir image from reflected light of the Ir light to performing face authentication will be described.

### Structure of the Portable Terminal

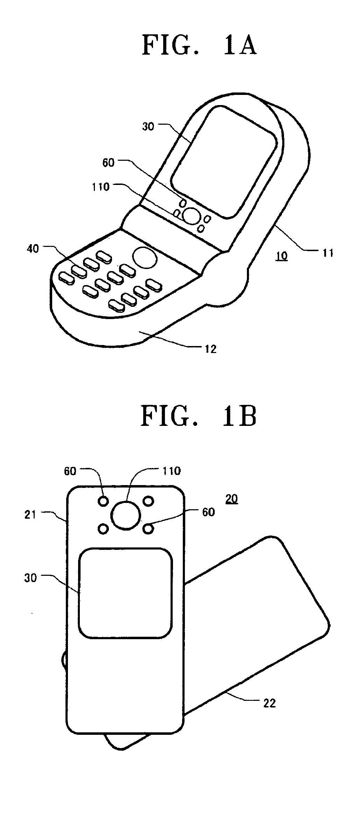

FIG. 1A is a perspective view of a folder type mobile phone 10 according to an embodiment of the present invention. When the folder type mobile phone 10 is unfolded, a monitor 30 is disposed in a first case 11, and input buttons are disposed in a second case 12. A camera 110 and four Ir light emitting diodes (LEDs) 60 emitting Ir rays are disposed on the same surface as the monitor in the first case 11. The camera 110 and the Ir LEDs 60 are elements of an Ir face authentication apparatus 100, which will be described later. The camera 110 may photograph at least an infrared light image. If a predetermined input button 40 is pressed or the folder type mobile phone 10 is unfolded, the Ir LEDs 60 and the camera 110 start operating.

FIG. 1 B is a rear view of a rotary type mobile phone 20 having a rotation function, according to an embodiment of the present invention. A large-sized monitor (not shown) is disposed on a front surface of a first case 21, and a small-sized monitor 30 is disposed on a rear surface of the first case 21. Input buttons 40 (not shown) of the rotary type mobile phone 20 are disposed on a rear surface of a second case 22. A camera 110 and two Ir LEDs 60 emitting infrared are disposed on the rear surface of the first case 21 on which the small-sized monitor 30 is disposed. If one of the input buttons 40 is pressed or the rotary type mobile phone 20 is rotated, the Ir LEDs 60 and the camera 110 start operating.

The folder type mobile phone 10 and the rotary type mobile phone 20 are shown as examples of portable terminals in FIG. 1A and 1 B. However, a portable terminal of the present invention is not limited to the above-described examples but may be a straight or sliding type mobile phone or a personal digital assistant (PDA). Also, a portable terminal of the present invention may be a portable notebook computer with a universal serial bus (USB) camera. The portable terminal of the present invention may be an apparatus that a user can hold to change a distance between the camera 110 and a face.

### Structure of Ir Face Authentication Apparatus

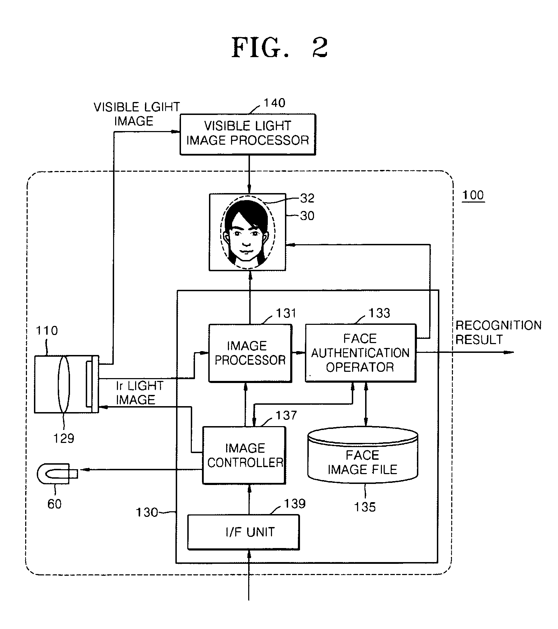

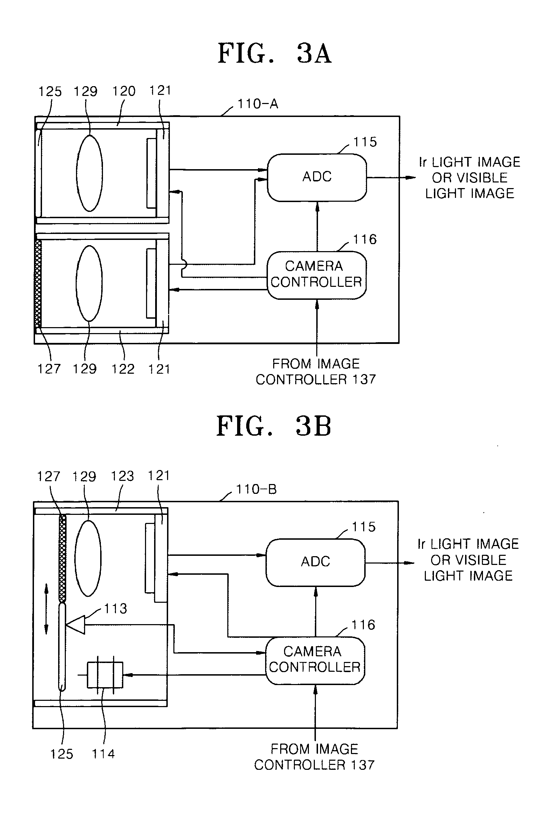

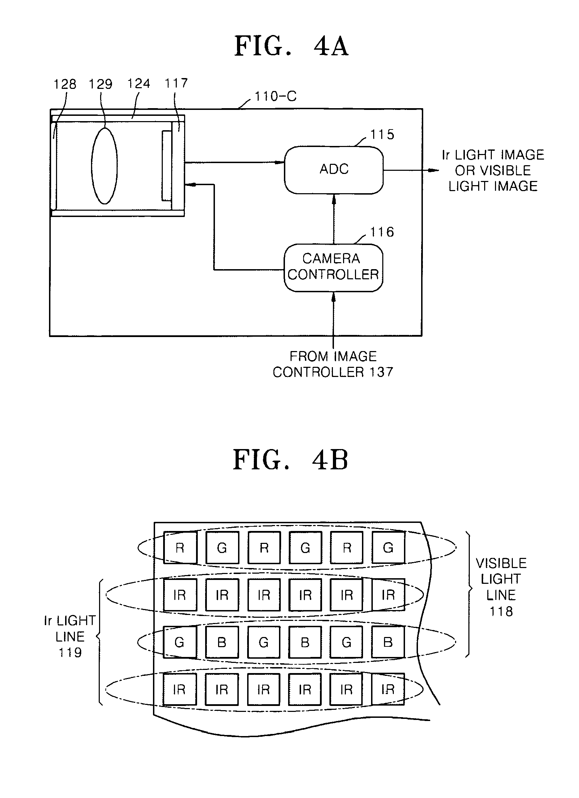

FIG. 2 is a block diagram of the Ir face authentication apparatus 100 according to an embodiment of the present invention. The Ir face authentication apparatus 100 includes an Ir LED 60, a camera 110, a face authenticator 130, and a monitor 30. The Ir LED 60 emits Ir light. The camera 110 images at least an image of the Ir light. The face authenticator 130 authenticates a face using the image of the Ir light imaged by the camera 110. The monitor 30 displays the Ir light image. In the present embodiment, the cameras 110 of the folder type mobile phone 10 and the rotary type mobile phone 20 may image not only an Ir light image but also a visible light image. If the camera 110 images a visible light image, the visible light image is transmitted to a visible light image processor 140. The camera 110 will be described in detail later with reference to FIG. 3 or 4. The visible light image transmitted to the visible light image processor 140 is transmitted to the monitor 30 so as to display the visible light image. The monitor 30 may display not only an Ir light image but also a visible light image, or an additional monitor may be used.

The face authenticator 130 includes an image processor 131, a face image file 135, a face authentication operator 133, and an image controller 137. The image processor 131 processes the Ir light image. The face image file 135 stores face image data of a person. The face authentication operator 133 extracts a contour or feature of the face and compares the contour or feature of the face with the face image data stored in the face image file 135 to authenticate the face. The image controller 137 controls the operations of the image processor 131, the face image file 135, and the face authentication operator 133. The image controller 137 is connected to an I/F unit 160 which receives an instruction signal from an input button 140 of FIG. 1 or a switch. The image controller 137 is also connected to the Ir LED 60 and the camera 110 to control the Ir LED 60 and the camera 110 according to the instruction signal received through the I/F unit 160.

### Operation of Ir Face Authentication Apparatus

The operation of the Ir face authentication apparatus 100, according to an embodiment of the present invention, will now be described with reference to FIG. 2. When the I/F unit 160 receives the instruction signal from the input button 40 or the switch, the instruction signal is transmitted to the image controller 137. The image controller 137 then drives the Ir LED 60 and the camera 110. The Ir LED 60 may be continuously switched on during authentication of the face, or may be switched on/off in accordance with an imaging timing of the camera 110. The image controller 137 may display a frame 32 indicating a position and a size of the face to the monitor 30 through the image processor 131.

The Ir light emitted from the Ir LED 60 is irradiated onto a face of a person, and then reflected light from the face of the person is incident on the camera 110. The camera 110 converts the reflected light into an electrical signal and transmits the electrical signal to the image processor 131. The image processor 131 processes an Ir light image to display the image on the monitor 30 and transmits an Ir light image signal to the monitor 30. The monitor 30 displays not only the frame 32 indicating the position and size of the face but also the Ir light image. A user moves an arm upward, downward, to the right and/or left or spreads or bends the arm to adjust a position of the folder type mobile phone 10 or the rotary type mobile phone 20, not so as to deviate the face from the frame 32 of the monitor 30, not so as to display the face too large to deviate from the frame 32 of the monitor 30, or not so as to display the face too small.

The image processor 131 transmits an image signal including a contour and a feature of the face to the face authentication operator 133. The face authentication operator 133 extracts the contour of the face from which hair has been removed. The face authentication operator 133 operates the positions of the eyes, nostrils, and mouth and relationships among these positions and then checks the feature of the face. The face authentication operator 133 accesses the face image file 135 to read the face image data from the face image file 135. The face authentication operator 133 compares the contour and feature of the face with the read face image data. The face authentication operator 133 outputs a recognition result signal outside the Ir face authentication apparatus 100. As indicated with an arrow marked from the face authentication operator 133 to the monitor 30, the face authentication operator 133 may transmit the recognition result signal to the monitor 30 to display the message "The face could be recognized as the face of the person" or "The face could not be recognized as the face of the person." Also, the face authentication operator 133 may output a voice message to inform the user of a recognition state of the face without displaying the recognition state on the monitor 30.

An Ir light image of the face displayed on the monitor 30 is monochrome, i.e., close to a black image. However, the camera 110 images an image to a depth of several mm from a skin surface of the face not an image of the skin surface of the face through Ir light irradiation of the face. For example, freckles or scars on the skin surface of the face are not imaged. Also, thick make-up put on the face is not imaged in the Ir light image. Thus, although a person tries to disguise him/herself using makeup to look like other person, this person is not authenticated as the other person. Also, even if a person is wearing glasses, the glasses hardly affect the authentication of the person. Thus, although the glasses are replaced with new glasses, a high recognition rate can be obtained through face authentication. In addition, even if the camera 100 is used to photograph a face picture having the same size as the face of the user, the face picture reflects Ir light at high reflectance. In other words, an Ir light image obtained by photographing the picture of a face is similar to an image obtained by photographing a blank page under visible light. Thus, the face picture is not authenticated as the face of the user. If the positions of eyes, nostrils, and mouth and relationships among these positions are grasped, face authentication is performed at high recognition rate.

Because visible light is not used, face authentication is not affected by disturbance and thus a high authentication rate is obtained. For example, if face authentication is performed using visible light, face authentication is affected by flickering of a fluorescent lamp. Also, as long as flash photographing or illumination from a front part is not performed during face authentication, a shadow is formed beside or under the nose by illumination installed on a roof or the like. Thus, face authentication using visible light has a low recognition rate. In the present embodiment, since Ir light is irradiated, the above-described problems do not occur.

### Structure of Camera

FIGS. 3A through 4B illustrate the basic structure of the camera 110 according to embodiments of the present invention. The same reference numerals denote the same elements. FIG. 3A illustrates a camera 110-A including a visible camera light receiving unit 120 and an Ir light camera light receiving unit 122. The visible camera light receiving unit 120 includes a visible light filter 125, a lens 129, and a photoelectric transformation element, e.g., an area charge-coupled device (CCD) 121. The visible light filter 125 transmits only visible light but intercepts light having a wavelength of about 760nm or more. The lens 129 condenses the visible light which passed through the visible light filter 125. The area CCD 121 converts the visible light condensed by the lens 129 into an electrical signal. The Ir camera light receiving unit 122 includes an Ir filter 127, a lens 129, and an area CCD 121. The Ir filter 127 transmits only light having a wavelength of about 760nm or more. The lens 129 condenses Ir light which passed through the Ir filter 127. The area CCD 121 converts the Ir light condensed by the lens 129 into an electrical signal. The visible light filter 125 and the Ir filter 127 are disposed between optical paths formed between a face of a user and the lenses 129, but may be disposed between optical paths formed between the lenses 129 and the area CCDs 121. If a scenery or the like does not need to be photographed, the camera may include only the Ir camera light receiving unit 122.

The camera 110-A further includes an analog-to-digital converter (ADC) 115 and a camera controller 116. The ADC 115 converts the electrical signals output from the area CCDs 121 into digital signals. The camera controller 116 controls an overall operation of the camera 110-A. The camera controller 116 separately drives the area CCDs 121 of the visible camera light receiving unit 120 and the Ir camera light receiving unit 122 according to an instruction signal output from an image controller 137, and the ADC 115 converts an analog signal into a digital signal. A digital signal corresponding to an Ir light image or a visible light image is output from the camera 110-A due to such an operation. In the case of the folder type mobile phone 10, the Ir camera light receiving unit 122 may be disposed toward the monitor 30 when face authentication is performed as illustrated in FIG. 1A. If a person desires to photograph a scenery or another person, the visible camera light receiving unit 120 may be disposed on a rear surface of the monitor 30 in the first case 11. In other words, a size or thickness of the first case 11 is increased. However, if both convenience of face authentication and convenience of normal photographing are considered, the camera 110-A including the visible camera light receiving unit 120 and the Ir camera light receiving unit 122 is effective.

FIG. 3B illustrates a camera 110-B including a filter switching camera light receiving unit 123. Only elements of the camera 110-B different from those of the camera 110-A will be described, and the descriptions of the same elements of the camera 110-B as those of the camera 110-A will be omitted. The filter switching camera light receiving unit 123 includes an area CCD 121 and a lens 129. The filter switching camera light receiving unit 123 further includes a visible light filter 125, a mechanical tool, a driving motor 114, and a signal sensor 113. The mechanical tool switches the visible light filter 125 and an Ir light filter 127 in front of the lens 129. The driving motor 114 drives the mechanical tool. The signal sensor 113 recognizes which filter is disposed in front of the lens 129. A camera controller 116 receives from an image controller 137 an instruction signal to determine which one of an Ir light image and a visible light image is to be output. If the instruction signal indicates that the visible light image is to be output, the camera controller 116 receives a signal indicating which filter is disposed in front of the lens 129 from the signal sensor 113. If the Ir light filter 127 is disposed in front of the lens 129, the camera controller 116 drives the driving motor 114 to move the visible light filter 125 ahead of the lens 129 and to retreat the Ir light filter 127 from an optical path. If the instruction signal indicates that the visible light filter 125 is disposed in front of the lens 129, the camera controller 129 performs a next operation. By performing such an operation, the entire surface of the area CCD 121 may be covered with the visible light filter 125, and a visible image may be output from the area CCD 121. The visible light image and the Ir light image can be obtained using single area CCD 121 and single lens 129. Thus, the size of the camera 110-B and manufacturing cost thereof can be reduced. Since only one area CCD 121 is used, a high performance CCD with many pixels may be used.

FIG. 4A illustrates a camera 110-C including a camera light receiving unit 124 having a filter installed in a light receiving element. A glass plate 128 is installed at the camera light receiving unit 124 of FIG. 4A to prevent dust so as to transmit a wide light wavelength. A visible light filter 125 and an Ir light filter 127 are installed in front of a light receiving element of a switching CCD 117. FIG. 4B is an enlarged view of the light receiving element of the switching CCD 117. As shown in FIG. 4B, the visible light filter 125 includes R filters transmitting red light, G filters transmitting green light, and B filters transmitting blue light. The switching CCD 117 includes four lines, e.g., a first visible light line 118 on which the R and G filters are alternately arranged, an lr light line 119 on which Ir filters 127 transmitting Ir light are arranged, a second visible light line 118 on which the G and B filters are alternately arranged, and an Ir light line 119 on which Ir filters are arranged. Arrangements of the four lines are sequentially repeated in an area of the switching CCD 117.

A camera controller 116 shown in FIG. 4A receives an instruction signal indicating which one of Ir and visible light images are to be output from an image controller 137. If the instruction signal indicates that the visible light image is to be output, the camera controller 116 controls only the visible light lines118 to output image signals. The visible light image is input to an ADC 115 and thus converted into a digital signal by the ADC 115. If the instruction signal indicates that the Ir light signal is to be output, the camera controller 116 controls the Ir light lines 119 to output image signals. The camera 110-C can be electrically switched and thus have a fast response time and be less broken down.

The cameras 110-A, 110-B, and 110-C are illustrated in FIGS. 3A through 4B. However, solid-state imaging devices used in the cameras 110-A, 110-B, and 110-C are not limited to CCDs, and may also be complementary metal-oxide semiconductors (CMOSs). R, G, and B filters are used in the visible light filter 125 in FIG. 4B. However, the visible light filter 125 may include magenta (Mg), cyan (Cy), yellow (Ye), and green (G) filters.

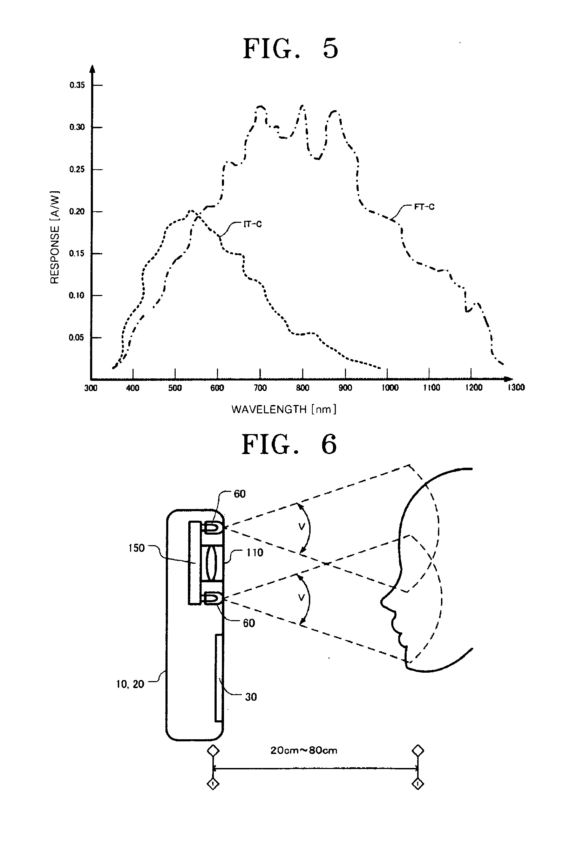

FIG. 5 is an exemplary graph illustrating a spectral response of the area CCD 121 or the switching CCD 117. Here, a horizontal axis denotes a wavelength (nm), and a vertical axis denotes a spectral response (A/W).

The mobile phone 10 as an example of a portable terminal has a camera function in many products. A CCD of the mobile phone 10 is an inter-transfer type CCD and hereinafter, is referred to as an IT-CCD. The IT-CCD includes a photodiode, a vertical transmission CCD, and a horizontal transmission CCD. The photodiode converts light into an electric charge in a pixel area. The vertical transmission CCD and the horizontal transmission CCD transmit the electric charge to an amplifier. Thus, a light receiving area of the IT-CCD is reduced. For example, the IT-CCD has a characteristic such as distribution IT-C as shown in FIG. 5. A spectral response is somewhat increased in a visible light range from 380nm to 760nm but the spectral response is 0.1A/W or less in visible and Ir light ranges of about 720nm or more.

There is also a frame transfer type CCD and hereinafter, is referred to as an FT-CCD. With regard to a frame transfer CCD (FT-CCD), the FT-CCD is divided into an image area generating charges and an accumulating area accumulating the charges. Both the image area and the accumulating area may transmit charges and thus serve as vertical transmission CCDs. The imaging and accumulating areas may transmit charges to an amplifier using a horizontal transmission CCD. The image area may be great in the FT-CCD, and thus a dynamic range is great. Also, if an .Ir filter is installed, a spectral response is high. For example, the FT-CCD has a characteristic such as distribution FT-C as shown in FIG. 5. The spectral response is high in an Ir light range of 760nm or more but is only 0.25A/W or less in an Ir light range of about 900nm or less. For example, a difference in the spectral response occurs about 10 times around an Ir light range between 880nm and 1020nm.

### Structure of Ir LED

An Ir LED 60 according to an embodiment of the present invention will now be described with reference to FIGS. 6 through 8.

A user is required to photograph a face by holding a mobile phone 10 or 20 as a portable terminal so as to authenticate the face. Thus, in the present embodiment, a distance between the Ir LED 60 or a camera 110 and the face is within a range between 20cm in an arm-bent state and 80cm in an arm-fully-extended state. The most preferable imaging distance for authenticating the face is within a range between 30cm and 50cm. When the arm is bent, the distance between the camera 110 and the face may be within a range between 10cm and 15cm, and a lens 129 of the camera 110 must have a very wide angle in this case. However, if the lens 129 with a very wide angle is used and the distance between the camera 110 and the face is about 40cm, the face may appear too small to be authenticated. The most preferable imaging distance for authenticating the face may be appropriately changed according to the usage purpose of the portable terminal. For example, if the portable terminal is a notebook computer equipped with the Ir face authentication apparatus 100, the distance between the camera 110 and the face may be within a range between 50cm and 60cm. If a security apparatus is installed at an entrance of a building or a gate of a room to authenticate a person's face, the distance between the camera 110 and the face may be within a range between 60cm and 150cm so as to authenticate the face without an access of the face to the camera 110. If a security apparatus is installed in an automobile and a user holds a handle of the automobile, the distance between the camera 110 and the face may be within a range between 40cm and 70cm.

FIG. 6 is an image view illustrating irradiation of Ir light onto a face using a mobile phone 10 or 20. Referring to FIG. 6, an optical board 150 including Ir LEDs 60 and a camera 110 is installed in the mobile phone 10 or 20. The Ir LEDs 60 and the camera 110 are integrated into a single body so as to reduce manufacturing cost and size. A monitor 30 is disposed on the same surface as the Ir LEDs 60 and the camera 110, and thus the Ir LEDs 60, the camera 110, and the monitor 30 may be integrated into a single body. Two LEDs 60 are installed on the optical board 150 (in this case, the camera 110 is placed between the two LEDs 60), as shown in FIG. 6, but more than two LEDs 60 may be used. A distance between the Ir LEDs 60 is within a range between about 15mm and 40mm. Both the Ir LEDs 60 and LEDs are generally manufactured so as to have good directivity. At this time, the Ir LEDs 60 each having a visual angle **V** between about 30° and 40° were used. A scattering plate may be disposed close to the Ir LEDs 60 to adjust the visual angle **V** to about 80°. In this case, however, Ir light does not reach far.

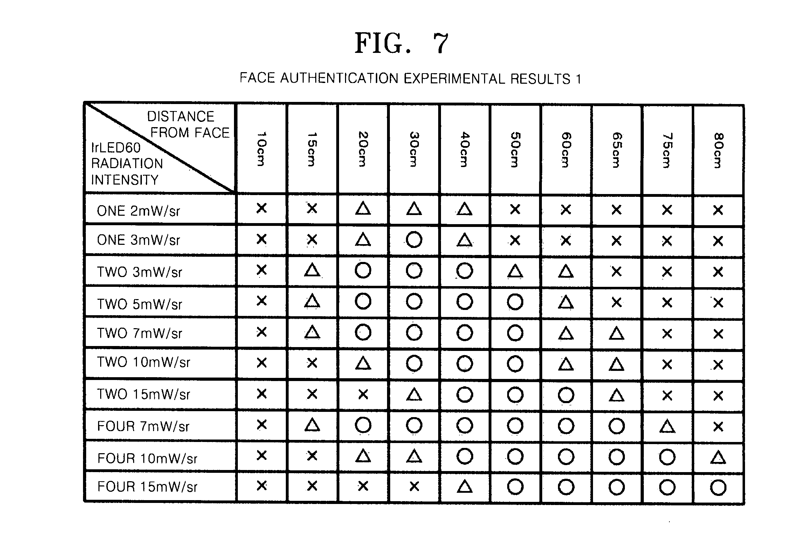

FIG. 7 shows a table 1 illustrating data obtained experimentally with regard to the number of the Ir LEDs 60 arranged in a mobile phone 10 or 20. An IT-CCD having the characteristic of distribution **IT-C** of FIG. 5 was used in experiments of FIG. 7. A distance between the Ir LED 60 and a face was measured at intervals of 5cm within a range between 10cm and 20cm and a range between 60cm and 80cm, and at intervals of 10cm within a range between 20cm and 60cm. Also, variations of a radiation intensity (mW/sr) of an Ir LED 60, radiation intensities of two Ir LEDs 60, and radiation intensities of four Ir LEDs 60 were measured for a current value equal to 50mA and a voltage equal to 5V. In cells formed through combination of the distance and the radiation intensities of the Ir LEDs 60, "○" indicates that face authentication was possible 9 times among 10 test results, "Δ" indicates that face authentication was possible 6 to 8 times among 10 test results, and "x" indicates that face authentication was possible 5 times or less among 10 test results. Also, the Ir LED 60 emits Ir light within a wavelength range between 760nm and 1200nm. Ir LEDs emitting light with various wavelength ranges are being sold. A face authentication rate is high in the case of an Ir LED emitting light with a wavelength between 800nm and 1020nm, in particular.

According to the results of FIG. 7, if the distance between the Ir LED 60 and the face is short, the lr LED 60 having a strong radiation intensity non-uniformly illuminates a surface of the face. Thus, a recognition rate is low. Also, if the distance between the Ir LED 60 and the face is long, the Ir LED 60 having a weak radiation intensity uniformly illuminates the surface of the face. However, Ir light emitted from the Ir LED 60 does not sufficiently reach the surface of the face.

If the distance between the face and the Ir LED 60 is about 30cm and the face is authenticated using the mobile phone 10 or 20, only one Ir LED 60 having a radiation intensity of 3mW/sr may be used. If a plurality of Ir LEDs 60 is used, power consumption increases. For a mobile phone consuming as a small amount of power as possible, an Ir LED 60 having a radiation intensity of 3mW/sr may be installed on the optical board 150. About four Ir LEDs 60 each having a radiation intensity of 7mW/sr may be disposed on the optical board 150 in order to authenticate the face at an optimal face authentication distance between 30cm and 50cm.

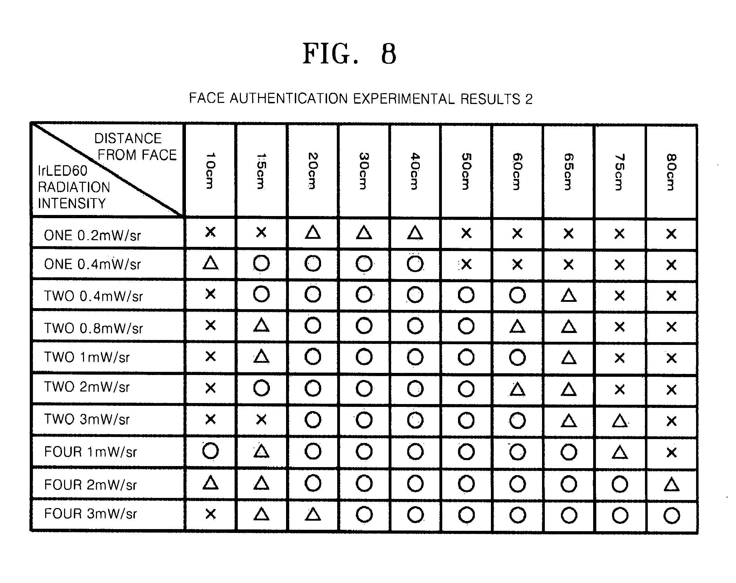

FIG. 8 shows a table 2 illustrating data obtained experimentally with regard to the number of Ir LEDs 60 arranged in the mobile phone 10. An FT-CCD having the characteristic of distribution **FT-C** of FIG. 5 was used in experiments of FIG. 8. A distance between a face and an Ir LED 60 was measured at intervals of 5cm within a range between 10cm and 20cm and a range between 60cm and 80cm, and at intervals of 10cm within a range between 20cm and 60cm. A radiation intensity of the Ir LED 60 shown in FIG. 8 was obtained for a current value equal to 10mA and a voltage equal to 5V. In FIG. 8, "O," "Δ," "x" have the same meanings as explained with regard to FIG. 7.

Different from the table of FIG. 7, the radiation intensity of the Ir LED 60 is within a range between 1/5 and 1/10. However, a spectral response of the FT-CCD emitting light with a wavelength between 800nm and 1020nm is about 10 times higher. Thus, face authentication may be performed even at a weak radiation intensity. In FIG. 8, if the distance between the Ir LED 60 and the face is short, an Ir LED 60 having a strong radiation intensity non-uniformly illuminates a surface of the face. Thus, a recognition rate is low. If the distance between the Ir LED 60 and the face is long, an Ir LED 60 having a weak radiation intensity does not non-uniformly illuminates the surface of the face. Also, Ir light emitted from the Ir LED 60 does not sufficiently reach the surface of the face.

If a plurality of Ir LEDs 60 is installed in the mobile phone 10, the Ir LEDs 60 do not necessarily need to emit light having the same wavelength. As will be described later, a plurality of Ir LEDs emitting lights of different wavelengths appropriate for Ir face authentication may be used. Ir Filter

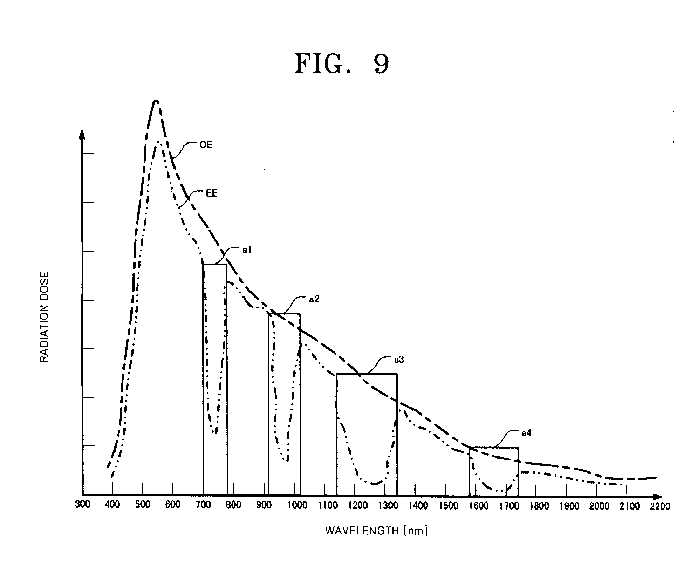

FIG. 9 is a graph illustrating a spectrum of a wavelength of sunlight. A horizontal axis denotes a wavelength, and a vertical axis denotes a radiation dose. A peak of a radiation dose **OE** outside the atmosphere appears in a visible light area, and the radiation dose **OE** is reduced to Ir light with a wavelength of 3000nm.

A radiation dose **EE** on the earth's surface has a falling range **a1** (in which the radiation dose is abruptly decreased) around a visible light range between 680nm and 760nm. Also, the radiation dose has a falling range **a2** around an Ir light range between 860nm and 980nm, a falling range **a3** around an Ir light range between 1150nm and 1350nm, and a falling range **a4** around an Ir light range between 1580nm and 1750nm. The falling range **a1** of the radiation dose EE in the visible light range is regarded as a phenomenon occurring due to absorption of visible light having a wavelength between 680nm and 760nm into atmosphere oxygen. The falling ranges **a2, a3,** and **a4** of the radiation dose **EE** in the Ir light range are regarded as phenomena occurring due to absorption of Ir light having the corresponding wavelength into atmosphere steam.

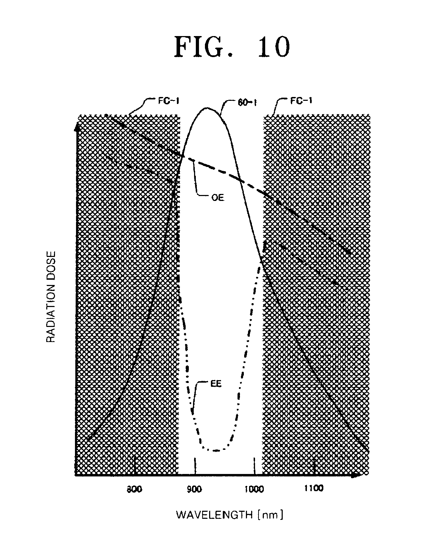

FIG. 10 is a graph illustrating a relationship between a wavelength of a first Ir LED 60-1 as a first example of the Ir LED 60 and a wavelength cut of a first Ir filter 127-1 as a first example of the Ir filter 127.

As described above, according to an embodiment of the present invention, Ir light emitted from the Ir LED 60 is irradiated onto a face. In particular, the sun emits a large amount of radiation in the summer, and thus a large amount of Ir light radiation is emitted. Thus, the Ir light emitted by the Ir LED 60 may interfere with an Ir light component of the sunlight, and thus a face authentication rate when authentication is performed outdoors in the summer may be lowered. As a result, a wavelength of the Ir LED 60 and the Ir filter 127 may be set so as to increase a face authentication rate when authentication is performed outdoors in the summer.

The falling area **a2** of the radiation dose of FIG. 9 is enlarged as shown in FIG. 10. A radiation dose of Ir light on the earth's surface is small in a wavelength range between 860nm and 980nm. Thus, the first Ir LED 60 peaks in the wavelength range between 860nm and 980nm. As a result, Ir light emitted by the first Ir LED 60 interferes less with the Ir light component of the sunlight. Also, the first Ir filter 127-1 is set to transmit light having a wavelength between 830nm and 1040nm. A wavelength range **FC-1** of 830nm or less and a wavelength range **FC-1** of 1040nm or more are intercepted by the first Ir filter 127-1. Interference with the Ir light component of the sunlight is reduced due to the first Ir filter 127-1. Thus, if both the first Ir LED 60-1 and the first Ir filter 127-1 are set within the above-described wavelength range, a face authentication rate when authentication is performed even outdoors in the summer is lowered.

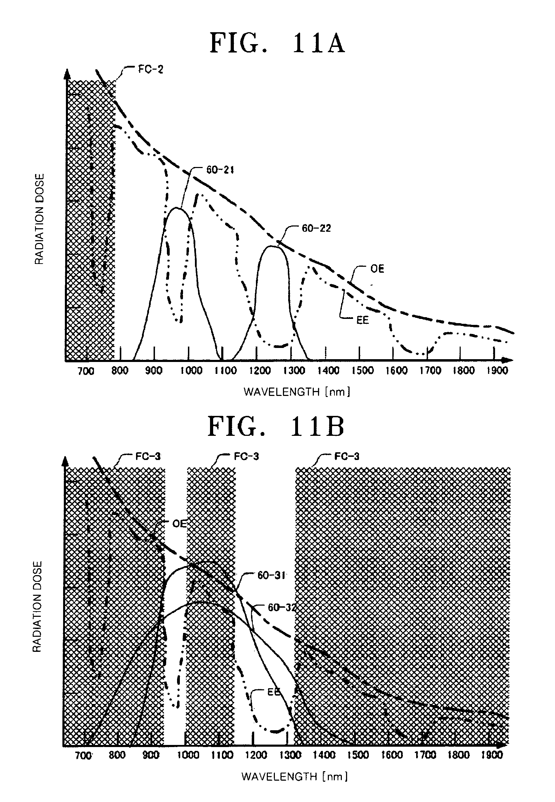

FIG. 11A is a graph illustrating a relationship between a wavelength of a second Ir LED 60-2 as a second example of the Ir LED 60 and a wavelength cut of a second Ir filter 127-2 as a second example of the Ir filter 127. FIG. 11 B is a graph illustrating a relationship between a wavelength of a third Ir LED 60-3 as a third example of the Ir LED 60 and a wavelength cut of a third Ir filter 127-3 as a third example of the Ir filter 127.

Referring to FIG. 11A, the second Ir filter 127-2 cuts a wavelength range **FC-2** of about 780nm or less. In other words, the second Ir filter 127-2 cuts all visible lights. The second Ir LED60-2 includes an Ir LED 60-21 mainly emitting Ir light with a wavelength between 880nm and 980nm and an Ir LED 60-22 mainly emitting Ir light with a wavelength between 1150nm and 1350nm. Thus, the second Ir filter 127-2 cutting the wavelength range **FC-2** of about 780nm or less does not interfere with the sunlight in the summer due to a great radiation of the second lr LED 60-2 in the falling ranges **a2** and **a3** of the radiation dose EE on the earth's surface.

Referring to FIG. 11 B, according to an embodiment of the present invention, a third lr LED 60-31 uses an Ir LED 60 mainly emitting light with a wavelength between 900nm and 1300nm. In other words, the third Ir LED 60-31 irradiates Ir light in a wide range. The third lr filter 127-3 cuts a wavelength range **FC-3** excluding a wavelength between 940nm and 1000nm and a wavelength between 1150nm and 1320nm. Thus, the third Ir LED 60-3 irradiating Ir light with a wide range does not interfere with the sunlight in the summer due to a great radiation of the third Ir LED 60-31 in the falling ranges **a2** and **a3** of the radiation dose EE on the earth's surface.

The third Ir LED 60-3 uses an Ir LED 60 which radiates Ir light having a broad wavelength between a visible light range of 1500nm and an Ir light range of 1500nm. In other words, the third Ir LED 60-3 irradiates a wide range of Ir light. Light irradiated from an lr LED including an Ir light range does not interfere with the sunlight in the summer due to a great radiation of the third Ir LED 60-3 in the falling ranges **a2** and **a3** of the radiation dose **EE** on the earth's surface.

The falling range **a4** of the radiation of FIG. 9 is not illustrated, however the same effects as in the falling ranges **a2** and **a3** can be obtained although a wavelength of the Ir LED 60 and a transmitted wavelength of the Ir filter 127 are set.

### Face Authentication Flowchart in Portable Terminal

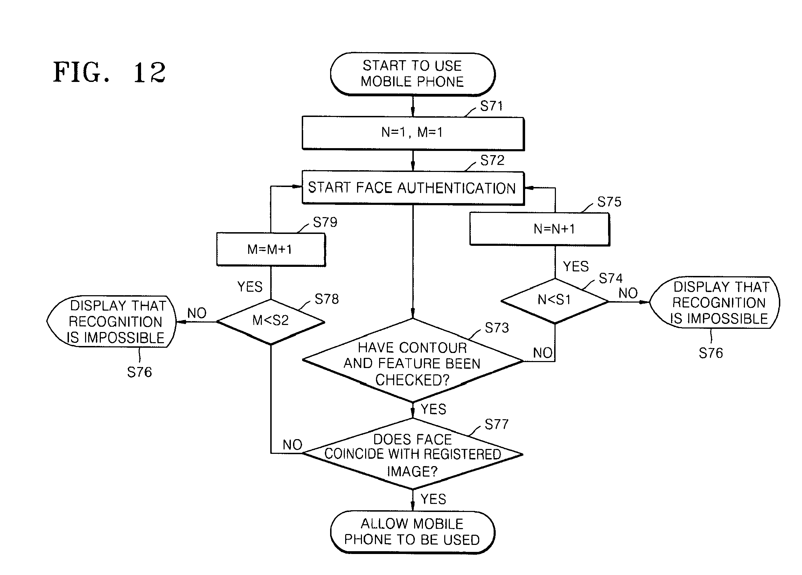

A face authentication operation performed in the mobile phone 10 as an example of a portable terminal according to an embodiment of the present invention will now be described. FIG. 12 is a flowchart of a method of performing face authentication in the mobile phone 10 according to an embodiment of the present invention. The mobile phone 10 stores a large amount of personal information or many e-mails. Thus, if face authentication is not successful, the mobile phone 10 cannot be used.

Referring to FIG. 12, in operation S71, parameters **N** and **M** used for face authentication are initialized. In operation S72, the face authentication starts. Here, the monitor 30 may display the frame 32 indicating a position and a size of a face when a user moves an arm upward, downward, or to the left and/or right or extends or bends the arm to adjust the distance between the face and the mobile phone 10 to an optimal position so as to increase a face recognition rate. A frame indicating a face size may have an elliptical, rectangular, or general contour of the face.

In operation S73, a contour and a feature of the face are checked. In other words, the face authentication operator 133 extracts the contour and feature of the face in response to an image processing speed of the image processor 131 as shown in FIG. 2. If the face is too large or small to check the contour and feature, the process proceeds to operations S74 and S75 to repeat operations S72 through S75 until the parameter **N** is smaller than a threshold value **S1** and the contour and feature of the face can be checked. If the parameter **N** is not smaller than the threshold value **S1,** the monitor 30 displays in operation S76 that the face authentication has not succeeded.

If: the contour and feature of the face are checked in operation S73, determination is made as to whether the face coincides with a registered image stored in the face image file 135 of FIG. 2 in operation S77. For example, although the contour and feature of the face are checked in operation S73, the face may be in a slanted position, and thus it may be determined that the face does not coincide with the registered face. If the face does not coincide with the registered image, the method proceeds to operations S78 and 79. Also, the method returns to operation S73 and S77 to check the contour and feature of the face and determine whether the face coincides with the registered image. If the parameter **M** is not smaller than a threshold value **S2** in operation S78, the monitor 30 displays in operation S76 that the face cannot be authenticated. If the face coincides with the registered image in operation S77, various manipulations of the mobile phone 10 are allowed.

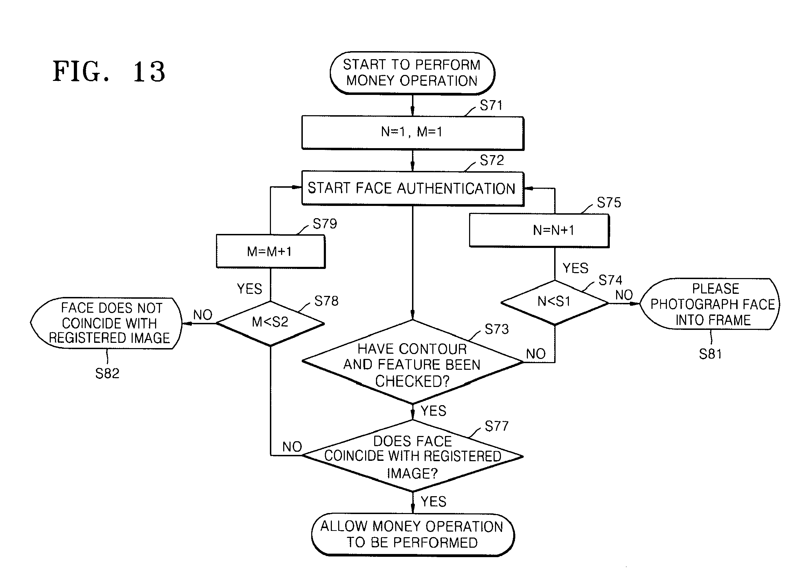

FIG. 13 is a flowchart of a method of authenticating a face when a specific function is performed, e.g., a money operation is performed, according to an embodiment of the present invention. The mobile phone 10 has many functions and recently has a function of a money operation. The mobile phone 10 may be used without face authentication. However, it is not allowed to use a specific function if face authentication is not successful for the specific function in which it may be determined that damages are increased due to a negative purpose such as money operations.

The method of FIG. 13 is almost to the same with the method of FIG. 12, but different contents of FIG. 13 from those of FIG. 12 use different operation numbers. In FIG. 12, if the face is not authenticated, the monitor 30 displays in operation S76 that the face cannot be authenticated. However, in FIG. 13, if photographing of a face is insufficient, i.e., a parameter **N** is not smaller than a threshold **S1** in operation 74, the monitor 30 displays the message "Please, photograph face into frame" in operation S81. If the face does not coincide with the registered face, i.e., a parameter **M** is not smaller than a threshold value **S2** in operation S78, the monitor 30 displays the message "Face does not coincide with registered image" in operation S82 so as to inform a user of failure of face authentication.

The lens 129 has been described as a premise of a fixed focus but may have an auto focus function. Also, a boundary between a visible light filter and an Ir light filter has been described as a wavelength of about 760nm but may be as a wavelength of about 780nm or 800nm. In addition, the visible light filter may transmit light with a wavelength of 800nm or less and the Ir light filter may transmit light having a wavelength of about 760nm or higher to form an overlapped range.

A mobile phone has been mainly described in the above-described embodiments of the present invention. However, the Ir face authentication apparatus 100 of the present invention may be installed in another device in which security is required. For example, if the Ir face authentication apparatus 100 is installed at an entrance of a building or a door of an automobile or a room, highly precise face authentication may be performed in dark or very bright areas. Moreover, if the Ir face authentication apparatus 100 is installed in a fixed security apparatus, a user may check the size and position of the user's face displayed on a display to adjust a sitting or standing position so as to improve a recognition rate.

A security apparatus performing a money operation such as an ATM or a safe-deposit box needs to prevent money theft. An Ir face authentication apparatus may be installed in the security apparatus to prevent unauthorized withdrawal using a face photograph or the like.

Furthermore, means for preventing entrance or exit of an unfamiliar person or an unjust copy or access is required to protect personal information or business secret. An Ir face authentication apparatus may be installed in a security apparatus at building entrances and exits or in a copy machine, personal computer, of the like to prevent unauthorized accesses.

As described above, according to the present invention, face authentication can be performed using an Ir light image. Thus, a face recognition rate can be considerably increased.

The invention is also directed to an apparatus for carrying out the disclosed methods and including apparatus parts for performing each described method steps. These method steps may be performed by way of hardware components, a computer programmed by appropriate software, by any combination of the two or in any other manner. Furthermore, the invention is also directed to methods by which the described apparatus operates. It includes method steps for carrying out every function of the apparatus.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An Ir (infrared) face authentication apparatus comprising:
a light source irradiating Ir light having a wavelength of 760nm or more onto a face;
an imaging unit detecting reflected light of the Ir light to output an Ir image; and
an authenticator performing authentication of the face using the Ir image.

2. The Ir face authentication apparatus of claim 1, wherein the authenticator specifies a contour of the entire face and positions of eyes from the Ir image to perform authentication of the face.

3. The Ir face authentication apparatus of claim 1, wherein the authenticator specifies a contour of the entire face, positions of eyes, positions of nostrils, and a position of a mouth from the Ir image to perform authentication of the face.

4. The Ir face authentication apparatus of one of claims 1 through 3, wherein the light source is one diode or a plurality of diodes, and a radiation intensity of the diode or a sum of radiation intensities of the plurality of diodes is 0.3mW/sr or higher.

5. The Ir face authentication apparatus of one of claims 1 through 4, wherein the light source is a plurality of diodes and Ir light irradiated from one diode of the plurality of diodes has a different wavelength from Ir light irradiated from another diode of the plurality of diodes.

6. The lr face authentication apparatus of one of claims 1 through 5, wherein the imaging unit is a photoelectric transformation element which comprises a visible light receiving element comprising a visible light filter receiving visible light, an Ir light receiving element comprising an Ir light filter receiving Ir light having a wavelength of 760nm or higher, and an element switching unit electrically switching the visible light receiving element and the Ir light receiving element.

7. The Ir face authentication apparatus of one of claims 1 through 5, wherein the imaging unit is a photoelectric transformation element which comprises a switching unit mechanically switching a visible light filter and an Ir light filter, the visible light filter covering the entire surface of the photoelectric transformation element to transmit light having a visible light wavelength, the Ir light filter covering the entire surface of the photoelectric transformation element to transmit Ir light having a wavelength longer than 760nm.

8. The Ir face authentication apparatus of one of claims 1 through 7, further comprising a display displaying the Ir image output from the imaging unit, wherein the image unit and the display are installed on the same surface.

9. The Ir face authentication apparatus of one of claims 1 through 8, wherein the Ir light filter is an Ir light filter transmitting light with a wavelength of 760nm or higher.

10. The Ir face authentication apparatus of claim 9, wherein the Ir light filter is an Ir light filter transmitting light with a wavelength in a range in which Ir radiation of the sunlight is suddenly decreased on the earth's surface.

11. The Ir face authentication apparatus of claim 1 or 5, wherein the light source includes a wavelength in a range in which Ir radiation of the sunlight is suddenly decreased on the earth's surface.

12. A portable terminal comprising the Ir face authentication apparatus of one of claims 1 through 11, wherein the authenticator operates when the portable terminal starts to be used or a money operation starts to be performed.

13. A security apparatus installed in a movable or fixed terminal, comprising:
the Ir face authentication apparatus of one of claims 1 through 11,
wherein the authenticator performs an authentication of a face of a person accessing the movable or fixed terminal.

14. A face authentification method, comprising the steps of:
- irradiating Ir light having a wavelength of 760nm or more onto a face,
- detecting reflected light of the Ir light to output an Ir image,
- performing authentication of the face using the Ir image.
